# EUROPÄISCHE PATENTANMELDUNG

(11) **EP 4 199 006 A1**
(43) Veröffentlichungstag der Anmeldung: **21.06.2023**
(21) Anmeldenummer: 21216016.2
(22) Anmeldetag: 20.12.2021
(51) Int. Cl.: H01B 3/30, C08L 83/12, H01B 3/42, H01B 3/46, H02K 3/30, H02K 3/40

(54) **ISOLATIONSSYSTEM, VERWENDUNG EINES POLYMERBLENDS UND ELEKTRISCHE MASCHINE MIT ISOLATIONSSYSTEM**

(71) Anmelder: Siemens Aktiengesellschaft, 80333 München (DE); Siemens Mobility GmbH, 81739 München (DE)
(72) Erfinder: LANG, Steffen, 91352 Hallerndorf (DE); SCHEMMEL, Florian, 90455 Nürnberg (DE); MÜLLER, Niels, 91166 Georgensgmünd (DE); MALEIKA, Marek, 90766 Fürth (DE)
(74) Vertreter: Siemens Patent Attorneys

(57) **Zusammenfassung**

Die Erfindung betrifft allgemein das Gebiet der Isolierung von elektrischen Leitern gegen Teilentladung -"TE"- im Mittel- und Hochspannungsbereich. Insbesondere betrifft die Erfindung ein Isolationssystem für eine elektrische Maschine, insbesondere eine rotierende elektrische Maschine mit Stator, wie einen Elektromotor und/oder einen Generator mit verbesserter Teilentladungsresistenz der polymeren Isolationssystems-Bestandteile. Überraschend hat sich herausgestellt, dass mit einem Polymerblend wie vorliegend beschrieben, die Verwendung von Glimmer und/oder Glimmerpapieren in elektrischen Isolationen ersetzt oder zumindest stark zurückgefahren werden können.

## Beschreibung

Die Erfindung betrifft allgemein das Gebiet der Isolierung von elektrischen Leitern gegen Teilentladung -"TE"- im Mittel- und Hochspannungsbereich. Insbesondere betrifft die Erfindung ein Isolationssystem für eine elektrische Maschine, insbesondere eine rotierende elektrische Maschine mit Stator, wie einen Elektromotor und/oder einen Generator mit verbesserter Teilentladungsresistenz der polymeren Isolationssystems-Bestandteile.

Elektrische Maschinen mit Stator, wie z.B. Motoren und Generatoren des Mittel- und Hochspannungsbereichs, weisen elektrische Leiter, eine Hauptisolation, eine Windungsisolierung mit Teilleiterisolation und ein Ständerblechpaket auf. Die Hauptisolation dient dem Zweck, die Leiter gegeneinander, gegen das Ständerblechpaket und gegen die Umgebung elektrisch zu isolieren. Die Windungsisolierung isoliert die Windungen der Spule gegeneinander. Bei Betrieb der elektrischen Maschine können sich durch elektrische Teilentladungen (TEs) die so genannten "Treeing"-Kanäle in der glimmerhaltigen Hauptisolation ausbilden. Als Folge der "Treeing"-Kanäle kann es zu einem elektrischen Durchschlag durch die Hauptisolation kommen. Im Niederspannungsbereich, wo Drähte und Kabel eingesetzt werden, kommt es im Betrieb nicht zwangsläufig zu elektrischen Entladungen, so dass dort keine Barriere gegen Teilentladungen erforderlich ist.

Als "Mittel- und Hochspannungsbereich" wird vorliegend die elektrische Energietechnik, die mit einer Hochspannung im Bereich über 700V - bis einschließlich 52kV - arbeitet, verstanden. Dadurch sind auch die Isolationssysteme, die für die schnellladefähigen Antriebssysteme der Automobilindustrie interessant sind, mitumfasst.

Eine Barriere in Form eines Isolationssystems gegen Teilentladungen wird bislang hauptsächlich durch den Einsatz von Schichtsilikat, insbesondere von Glimmer in der Hauptisolation erreicht, welcher eine hohe Teilentladungsbeständigkeit hat. Der Glimmer wird in Form von plättchenförmigen Glimmerpartikeln mit einer herkömmlichen Partikelgröße von mehreren 100 Mikrometern bis zu mehreren Millimetern zu einem Glimmerpapier verarbeitet, welches nachfolgend auf einem Träger, wie ein Glasfasergewebe und/oder Isolierfolie, aufgesetzt und verklebt wird, so dass die Glimmerpartikel den Flächenisolationsstoff in Form von einer Glimmerbreitbahn ergeben. Aus dieser Glimmerbreitbahn wird ein Glimmerband geschnitten, das zur Herstellung der Hauptisolation um den Leiter gewickelt wird. Darauffolgend wird zur Herstellung des Isolationssystems das Elektroisolations-Glimmerwickelband mit einem flüssigen Kunstharz imprägniert und anschließend wird das Kunstharz ausgehärtet.

Die dazu eingesetzten Glimmerpartikel sind nur schwer automatisiert abbaubar, deshalb ist wird immer wieder vermutet, dass dies auch durch Kinderarbeit in manchen Ländern erfolgt.

Die Herstellung eines Isolationssystems mit einem Flächenisolationswerkstoff als Nutauskleidung und/oder mit einer Glimmerbreitbahn und/oder einem Glimmerband ist deshalb nicht nachhaltig.

Bekannt sind Isolationssysteme - wie beispielsweise das unter der Marke "Micalastic^{®}" bekannte System -, bei dem in einem Vakuum-Druck-Imprägnierverfahren die Hauptisolation, ein Glimmerwickelband als Flächenisolationsstoff umfassend, mit einem Bisphenol-Epoxidharz imprägniert wird.

Micalastic^{®} ist auch aus der EP2763142A1 und der DE 102011083228A bekannt.

In Hochspannungsmotoren, wie Traktionsmotoren und großen Industriemotoren wird die TE-Resistenz der Isolation durch die Zugabe von Schichtsilikaten, eben hauptsächlich Glimmer, erhöht.

Dazu wird in den entsprechenden Isolationssystemen der Glimmer in Form von Papieren - bei Flächenisolationswerkstoffen in Form von Laminaten -, das heißt das Glimmerpapier wird auf Trägerfolien oder Trägergeweben bzw. Trägerpapieren, wie kalandriertes mAramid - z.B. in Form von Nomex^{®} - aufgebracht, um es in seiner mechanischen Festigkeit zu verbessern und um das Glimmerpapier besser verarbeiten zu können.

Bei Isolationssystemen mit Glimmerbändern wird das Papier mit einem Glasgewebeträger und/oder einer PET und/oder PI - Folie verbunden und in schmale Rollen geschnitten, die dann um die Spule gewickelt werden.

Auch bei Teilleiterisolationen kann Glimmer beispielsweise in Form eines Prepregs um die Teilleiter gewickelt und so die TE-Resistenz der Teilleiterisolation verbessert werden. Grundsätzlich werden zur Herstellung der entsprechenden Isolationssysteme alle diese Glimmer Laminate nach der Applikation mit einem Tränkharz imprägniert und verfestigt.

Insbesondere werden auch bei Traktionsmotoren Isolationssysteme mit Nutauskleidungen, die aufgrund der Anforderungen bislang aus glimmerhaltigen Laminaten mit z.B. mAramid und Polyimid als Trägerfolie bestückt sind, eingesetzt. Um ein Maximum an Leistung aus der Maschine herauszuholen, wird sie bei höchstmöglichen Stromdichten betrieben, wodurch aber auch nennenswerte Verluste in Form von Hitze entstehen. Traktionsmotoren werden insbesondere auch bei Temperaturen über 150°C betrieben.

Aus der DE 10 2020 208760 ist ein Flächenisolationswerkstoff aus einem Copolymer eines Polyetherimids mit einem Siloxan bekannt, allerdings zeigt dieser bei erhöhter Temperatur bis 220°C, die in Traktionsmotoren auftreten kann, einen Erweichungspunkt. Dies unter anderem auch deshalb, weil in dem Copolymer aus Polyetherimid und Siloxan wegen der weniger polaren Seitengruppen des Siloxans, diese gegenüber dem reinen Polyetherimid als "Verunreinigung" wirken, wodurch die Glasübergangstemperatur sinkt. Zwar können diese Polyetherimid-Siloxan-Copolymere durch geeignete Extrusionsverfahren flächig als Folie hergestellt werden, die ihrerseits eine ausreichende Elastizität aufweisen, um - fertig geschnitten - u.a. auch als Wickelbänder eingesetzt zu werden, aber als Wickelbänder im Betriebs-Temperaturbereich von z.B. Traktionsmotoren mit über 150°C, insbesondere über 170°C sind sie nicht einsetzbar.

Bei extrudierten Drahtisolationen bzw. bei umsponnenen, bandförmigen Drahtisolationen - nicht die Lösungsmittel-haltigen Drahtlacke - werden herkömmlich PEEK, PI, PAI, PPS, PEI, Polyesterimid (Duromer) und ähnliche eingesetzt.

Es gibt auch Isolationssysteme, die spritzgegossene Formteile, wie z.B. Zahnspulenkörper umfassen.

Die herkömmlich eingesetzten polymeren Bestandteile von Isolationssystemen sind nur gering oder gar nicht TE-resistent gegenüber elektrischen Entladungen. Die TE-Resistenz der Isolationssysteme kommt herkömmlich vom eingesetzten Glimmer. Vor allem sind die thermoplastischen Bestandteile der herkömmlichen Isolationssysteme grundsätzlich ohne Glimmer nicht TE-resistent.

Zur Verbesserung der Teilentladungs-Resistenz einer gewickelten Hauptisolation mit Kunstharz - also Polymerverguss ist der Einsatz nanoskaliger Partikel bekannt, die in dem Imprägniermittel vor dem Imprägnieren dispergiert werden. Durch die Anwesenheit der Partikel verkürzt sich jedoch die Topfzeit des Kunstharzes respektive des Imprägniermittels, was sich insbesondere in einer voranschreitenden Polymerisierung des Kunstharzes vor der Imprägnierung zeigt. Entsprechende Versuche mit gefüllten Imprägniermitteln sind wirtschaftlich momentan nicht im Fokus, weil zu viele prozessuale Probleme aufgetreten sind.

Bei den festen Isolationswerkstoffen, wie den Flächenisolationswerkstoffen von Isolationssystemen wurde der Ersatz von Glimmer bislang nicht erforscht.

Es ist daher Aufgabe der vorliegenden Erfindung ein Material zur Drahtextrusion, insbesondere zur Drahtextrusion eventuell vorgesehener Flach- oder Runddrähte und/oder von Steckspulen und/oder so genannten Hairpin-Flachdrähten für Statoren in elektrischen Motoren und Generatoren und/oder in der Hauptisolation, zur Verfügung zu stellen. Diese finden insbesondere bei Traktionsmotoren für Elektrofahrzeuge Anwendung.

Es besteht auch der Bedarf an einem Material, durch das im Spritzgussverfahren das Aufbringen einer Temperatur- und/oder Teilentladungs-stabilen Isolation ohne glimmerhaltiges Wickelband und insbesondere vorzugsweise auch ohne anschließende Vakuum-Imprägnier- "VPI"-Verfahren möglich ist.

Überall dort, wo hohe Temperatur und Teilentladung in Statoren für elektrische Motoren und Generatoren eine polymer aufgebaute Isolation schädigen können, wurde bisher Glimmer eingesetzt. Zum Ersatz des Glimmers bislang nun versucht, mit Füllstoffen, insbesondere mit Nanopartikel, die entsprechenden Eigenschaften bei Polymeren zu erzeugen. Dies allerdings bislang ohne durchschlagenden wirtschaftlichen Erfolg.

Aufgabe der vorliegenden Erfindung ist es, die TE-Resistenz der polymeren Anteile eines Isolationssystems zu implementieren, respektive zu steigern und einen Ersatz für Glimmer in Isolationssystemen allgemein und für Glimmerbänder und/oder Glimmerpapier im Besonderen zu schaffen und damit ein polymeres Material für die Drahtextrusion, den Spritzguss, das Formpressen und/oder einen Flächenisolationswerkstoff zur Verfügung zu stellen, das TE-resistenz zeigt und dessen Glasübergangstemperatur und/oder Schmelzpunkt zumindest über 150°C liegt, bevorzugt höher und/oder der einen Temperatur Index von 180 °C oder - wenn möglich - noch höher besitzt.

Diese Aufgabe wird durch den Gegenstand der vorliegenden Erfindung, wie er in der Beschreibung, den Figuren und den Ansprüchen offenbart ist, gelöst.

Dementsprechend ist Gegenstand der vorliegenden Erfindung ein Isolationssystem, ein Material in Form eines
- festen Flächenisolationswerkstoffes, und/oder
- Materials für die Drahtisolierung mittels Extrusion und/oder
- spritzgegossenen Formteils und/oder,
- formgepressten Formteils umfassend
dadurch gekennzeichnet, dass
das Material teilentladungsresistent ist, den Glimmeranteil im Isolationssystem zumindest teilweise ersetzt und ein Polymerblend zumindest dreier Blendpartner ist, in dem zumindest ein Copolymer auf Grundlage von Polyetherimid und Siloxan mit zumindest zwei Hochtemperaturthermoplasten geblendet vorliegt, wobei mindestens einer der HochtemperaturThermoplasten teilkristallin vorliegt.

Außerdem sind Gegenstand der Erfindung die Verwendungen dieses oben definierten Polymerblends.

Dazu gehört beispielsweise die Verwendung dieses Polymerblends mittels Drahtextrusion als Teilleiterisolation respektive Windungsisolation und/oder als Hauptisolation bei Hairpin-Spulen. Zur Herstellung des Isolationssystems ist hierbei vorzugsweise noch eine Fixierung - beispielsweise in der Nut - durch Vergießen, Imprägnieren, Beträufeln, Tauchen und/oder durch Spritzguss mit einem Kunstharz vorgesehen. Z.B. kann ein durch Drahtextrusion isolierter Teilleiter durch Spritzguss in der Nut fixiert werden.

Eine andere beispielhafte Verwendung des Polymerblends ist im Spritzguss-Verfahren, wie z.B. eines Stators eines elektrischen Motors oder Generators.

Vorteilhaft ist auch die Verwendung des Polymerblends in einem Formpress-Verfahren zur Herstellung des Isolationssystems und/oder von Teilen davon, insbesondere eines Stators eines elektrischen Motors oder Generators.

Auch die Verwendung des Polymerblends in Form einer Folie, wie z.B. bei der Nutzung als fester Isolationswerkstoff, insbesondere bandförmig, als Teil einer über ein Wickelband herstellbaren - z.B. Teilleiterisolation - genannten Windungsisolation und/oder Hauptisolation ist Gegenstand der Erfindung.

Des Weiteren ist auch die Verwendung des Polymerblends in Form eines Laminats - insbesondere als Flächenisolierwerkstoff z.B. für Nutauskleidungen eines Stators - auch ohne weitere Fixierung oder Stabilisierung durch z.B. Verguss - Gegenstand der vorliegenden Erfindung.

Auch in Form einer bandförmigen Folie und/oder eines bandförmigen Laminats ist die Verwendung des Polymerblends als zumindest Teil einer Wicklung und im VPI-Prozess imprägnierten und ausgehärteten Isolationssystems, Gegenstand der vorliegenden Erfindung. Beim VPI wird das den Polymerblend umfassende Band dann mittels Kunstharz imprägniert.

Nach einer vorteilhaften Ausführungsform der Erfindung liegt im Polymerblend - beispielsweise als amorpher - Hochtemperatur-"HT"-Thermoplast-Blendpartner Polyetherimid -PEI- vor.

Nach einer vorteilhaften Ausführungsform der Erfindung liegt im Polymerblend als teilkristalliner Hochtemperatur - "HT"-Thermoplast ein Polyetherketon und/oder ein Gemisch verschiedener Polyetherketone vor.

"Polyetherketone" -PEK - sind Polymere, in deren molekularen Rückgrat abwechselnd Keton- (R-CO-R) und Etherfunktionalitäten (R-O-R) vorkommen. Gut geeignet sind beispielsweise Polyaryletherketone -PAEK-, bei denen sich zwischen den funktionellen Gruppen jeweils eine in (1,4) -Position verknüpfte Arylgruppe befindet. Das starre Rückgrat der Polyetherketone und insbesondere der Polyaryletherketone verleiht den Materialien im Vergleich zu anderen Kunststoffen sehr hohe Glasübergangstemperaturen -Tgs- und/oder Schmelzpunkte, weshalb sie gemäß der Erfindung als zumindest ein Blendpartner des zumindest drei Blendpartner umfassenden Isolations-Polymerblend-Materials zum Ersatz von Glimmer durch TEresistentes Polymermaterial einsetzbar ist.

Geeignete Polyetherketone sind insbesondere:
- Poly(etheretherketon) - PEEK-,
- Poly(etherketonketon) - PEKK-,
- Poly(etheretheretherketon) - PEEEK -,
- Poly(etheretherketonketon) - PEEKK-,
- Poly(etherketonetherketonketon) -PEKEKK- und/oder
- Polyaryletherketon - PAEK -
sowie beliebige Kombinationen und/oder Mischungen der oben genannten Verbindungen.

Soweit in der Erfindung bereits getestet, sind die genannten Polyetherketone untereinander und mit den beiden anderen Blendpartner, insbesondere auch mit dem Copolymer auf Grundlage von Polyetherimid und Siloxan, beliebig mischbar und kombinierbar.

Nach einer vorteilhaften Ausführungsform der Erfindung ist vorgesehen, dass jeder der zumindest drei Polymerblend-Partner, - das zumindest eine Copolymer, die beiden Thermoplasten, von denen zumindest einer teilkristallin vorliegt - jeweils in einer Konzentration zwischen 1 und 70 Gew% im Polymerblend enthalten sind.

Allgemeine Erkenntnis der Erfindung ist es, dass ein Gemisch aus 3 Blendpartner, einem Copolymer, insbesondere einem Siloxan-Polyetherimid-Copolymer mit zumindest einem teilkristallin vorliegenden Thermoplasten im Blend ein stabiles Gemisch ergibt, das als ungefülltes Material zur Herstellung einer Isolation einsetzbar und insbesondere auch zur Folienherstellung geeignet ist.

Ganz allgemein liegen in einem teilkristallinen Blendpartner Sphärolithe vor, die eine für thermoplastische Kunststoffe typische kugelförmige Überstruktureinheit bezeichnen. Der Begriff Sphärolith bezeichnet dabei allgemein ein kugeliges und/oder strahliges Kristallaggregat, wobei Sphärolithe selbst keine Kristalle im kristallografischen Sinn sind, sondern Aggregate, also Anhäufungen von sehr vielen, kleineren kristallinen Bereichen darstellen. Diese können durch Röntgenbeugung nachgewiesen werden. In einer polymeren Überstruktur mit Sphärolithen sind Kristallite radialsymmetrisch angeordnet und über amorphe Zwischenbereiche verbunden. Da Sphärolithe kristalline Bereiche umfassen und damit doppelbrechend sind, lassen sie sich mit Hilfe der Polarisationsmikroskopie nachweisen. Die lichtmikroskopisch nachweisbare Größe liegt zwischen 1µm und mehreren 100pm. Bei sehr kleinen Sphärolithen ist das oben beschriebene Muster im Mikroskop nicht mehr zu erkennen. Man erkennt nur noch eine diffuse Streuung des Lichts.

Als "Blend-Material", "Polymerblend" oder kurz "Blend" werden vorliegend rein physikalische Gemische aus zwei oder mehreren unterschiedlichen Polymeren bezeichnet. Die Eigenschaften der so entstehenden Kunststoffe unterscheiden sich von denen der Ursprungspolymere. Bei dieser rein physikalischen Mischung entstehen keine neuen chemischen Bindungen zwischen den Makromolekülen. Polymerblends werden im Kurzzeichen durch ein zwischen die Bestandteile gesetztes "+" gekennzeichnet, im Gegensatz dazu werden bei Copolymeren fortlaufende Buchstabenfolgen verwendet.

Als "Flächenisolationswerkstoff" wird vorliegend ein unter Normalbedingungen fester Werkstoff bezeichnet, der beispielsweise als falzbarer Werkstoff, wie beispielsweise insbesondere in Form eines Laminats und/oder einer Folie, vorliegt. Das Laminat ist vorzugsweise zumindest zweilagig, wobei die Lagen - wiederum vorzugsweise - durch Laminierkleber verbunden sind. Es können zumindest zwei Lagen des gleichen Materials, aber auch verschiedenen Materials vorliegen.

Dabei können alle oder einige Lagen eines derartigen Laminats, das einen Flächenisolationswerkstoff bildet, aus einem oder mehreren verschiedenen Ausführungsbeispielen eines Polymerblends nach der Erfindung und/oder eine Kombination aus zumindest einer Lage eines Polymerblends nach der Erfindung kombiniert mit einer Lage aus einem anderen Material, das beispielsweise zur Abdeckung des Polymerblends bei der Herstellung des Isolationssystems dient, im Laminat vorliegen.

Als "anderes Material" in einem Laminat, das einen Flächenisolationswerkstoff bildet, kann beispielsweise ein Laminierpapier, wie es nach dem Stand der Technik für Nutauskleidungen eingesetzt wird, wie z.B. ein Aramid-Papier, wie z.B. aus mAramid verwendet werden.

Andererseits kann ein "Flächenisolationswerkstoff" auch in Form einer biegsamen, flexiblen Folie vorliegen, die vorzugsweise einlagig ist, aber unter Umständen auch mehrlagig, also ein biegsames, flexibles Laminat mehrerer Lagen, sein kann.

Als Kurzzeichen werden für Polymere, wie sie als Blendpartner hier neben dem Copolymer auf Grundlage von Polyetherimid und Siloxan einsetzbar sind, DIN-genormte, mit dem USamerikanischen Standard ASTM weitgehend übereinstimmende, Großbuchstabenfolgen bezeichnet. Beispielsweise steht PEK für Polyetherketon und PEI für Polyetherimid.

Als Copolymer wiederum werden Polymere bezeichnet, die aus zwei oder mehr verschiedenartigen Monomereinheiten zusammengesetzt sind. Dabei kommen statistische Copolymere, Gradientencopolymere, alternierende Copolymere, Blockcopolymere und Pfropfcopolymere vor.

Nach einer vorteilhaften Ausführungsform der Erfindung liegt der feste Flächenisolationswerkstoff, der z.B. als Ersatz für ein Glimmerband einer Wickelbandisolation für den VPI-Prozess einsetzbar ist, als Folie oder Laminat in breiter Rolle oder als Band in schmaler Rolle oder bandförmiger Ausschnitt einer Folie oder eines Laminats vor. Dieses - z.B. - Band aus einem Polymerblend gemäß der Erfindung kann in einem VPI-Verfahren mit einem Kunstharz, beispielsweise einem Duromer imprägniert und ausgehärtet und in der Anordnung dann im Isolationssystem, z.B. für die Hauptisolation eines Stators, fixiert werden.

Nach einer vorteilhaften Ausführungsform der Erfindung hat sich der Einsatz von einem oder mehreren schwefelhaltigen Polymeren als zusätzliche Blendpartner - jeweils entweder teilkristallin oder amorph - als geeignet erwiesen, unter anderem weil auch hier eine Folienherstellung und auch die Verarbeitung durch Extrusion ohne nennenswerte Entmischung mit den restlichen Blendpartnern möglich ist und die Teilentladungs-resistenz nochmal verbessert wird.

Dabei gibt es sowohl teilkristallin als auch amorph vorliegende schwefelhaltige Polymere, wobei die teilkristallin vorliegenden schwefelhaltigen Polymere wie z.B. Polyphenylensulfid - PPS - zwar auch vorrangig zur Erhöhung der Teilentladungsresistenz eingesetzt werden, aber auch wegen der Sphärolithen im Blend, die eine gewissen Rest-Festigkeit oberhalb des Tgs bewirken, so dass die polymeren Bestandteile des Isolationssystems bei Betriebs-Temperaturen oberhalb des Tgs nicht abtropfen, sondern gummiartig im Isolationssystem verbleiben und sich bei Abkühlung wieder verfestigen.

Insbesondere kann eine schwefelhaltige Polymer-Verbindung, ausgewählt aus der Klasse der schwefelhaltigen Polymere wie die der Polysulfone -PSU -, umfassend z.B. Polyphenylensulfid -PPS-, Polyphenylensulfon - PPSU-, Polyethersulfon - PESU- und/oder Polyarylensulfon - PAS-, Polybisarylsulfon, wie Poly bisphenylensulfon, etc. dem Polymerblend gemäß der Erfindung allein oder in beliebigen Kombinationen zugesetzt sein.

Dabei ist es insbesondere vorteilhaft, wenn die Menge an zugesetztem schwefelhaltigem Polymer im Bereich zwischen 1 Gew% und 25 Gew%, insbesondere zwischen 3 Gew% und 20 Gew% und besonders bevorzugt zwischen 4 Gew% und 15 Gew% liegt.

Alle genannten schwefelhaltigen Hochtemperatur-Thermoplaste können für sich und/oder in beliebigen Kombinationen und Mischungen eingesetzt werden.

Nach einer vorteilhaften Ausführungsform liegen die drei Blendpartner, Copolymer, und - beispielsweise - PEI und PEEK in ungefähr gleichen Masseanteilen im Blend vor, wobei beispielsweise alle drei Partner im Bereich zwischen 15 Gew% und 33 Gew%, insbesondere zwischen 20 Gew% und 30 Gew%, besonders bevorzugt zwischen 23 Gew% und 27 Gew% vorliegen.

Nach einer weiteren vorteilhaften Ausführungsform liegt das Copolymer auf Grundlage von Polyetherimid und Siloxan in geringstem Anteil vor, die beiden thermoplastischen Blendpartner dann beide in höheren Masseanteilen, die wiederum gleich oder verschieden sein können.

Nach wieder einer anderen beispielhaften Ausführungsform liegt Copolymer auf Grundlage von Polyetherimid und Siloxan zumindest in 15 Gew% des Polymerblends vor, PEI in zumindest 17 bis 20 Gew% und PEK, z.B. PEEK, in zumindest 35 Gew% vor.

Nach wieder einer anderen Ausführungsform liegt PEI in zumindest 12 Gew%, Copolymer auf Grundlage von Polyetherimid und Siloxan in zumindest 20 Gew% und PEEK in zumindest 33 Gew% vor.

Nach einer weiteren vorteilhaften Ausführungsform kann der Polymerblend auch gefüllt vorliegen, wobei Verstärkungsfüllstoffe, wie beispielsweise Verstärkungsfasern, insbesondere Glasfasern, beispielsweise in Form von Kurzglasfasern, als Füllstoff enthalten sein können.

Das "Copolymer auf Grundlage von Polyetherimid und Siloxan" hat auch in ungeblendeter Form Potential als Isoliermaterial im Mittel- und Hochspannungsbereich hinsichtlich der Beständigkeit gegenüber Teilentladungen. Die Erweichungstemperatur des Copolymers allein als Flächenisolationswerkstoff liegt allerdings nur geringfügig oberhalb 170°C, so dass dieser als Flächenisolationswerkstoff in einem Isolationssystem bei höheren Betriebstemperaturen, insbesondere bei Betriebstemperaturen oberhalb von 180°C nicht unverändert einsetzbar ist.

Durch ein Polymerblend gemäß einem bevorzugten Ausführungsbeispiel der Erfindung, also ein Blend von Copolymer auf Grundlage von Polyetherimid und Siloxan mit zwei Thermoplasten, hier insbesondere PEI und PEEK, in einer Menge von beispielsweise 10 bis 90 Gew% an PEI und PEEK zusammen, ergibt sich aus dem Copolymer ein derart verbesserter Flächenisolationswerkstoff, der als Folie verarbeitbar ist und in einem Temperatur-Bereich - gemeint ist bei einer Betriebstemperatur - einer damit isolierten elektrischen Maschine von beispielsweise 170°C bis zu 250°C einsetzbar ist.

Insbesondere Antriebsmotoren und Traktionsmotoren sind elektrische Maschinen, die dafür in Betracht kommen, weil sie bei hohen Temperaturen, also Temperaturen oberhalb 155°C, betrieben werden. Die Betriebstemperatur des Motors liegt vorzugsweise unter dem Tg des Polymerblends, der gemäß der vorliegenden Erfindung eingesetzt wird.

Durch einen Polymerblend gemäß einem Ausführungsbeispiel, beispielsweise mit 25 Gew% Copolymer, 35 Gew% PEI und 40 Gew% PEEK ist die Herstellung einer Folie als glimmerfreier Flächenisolierwerkstoff möglich. Die festen Isolierwerkstoffe, die bislang als Wickelbandisolierung eingesetzt werden und die grundsätzlich glimmerhaltig sind, können hier ohne Schichtsilikat und insbesondere ohne Glimmer und vor allem in gleich guter oder sogar verbesserter Qualität hergestellt werden. Dazu ist insbesondere auch der Nachhaltigkeitsaspekt zu erwähnen, da "Glimmer" ein Naturstoff ist.

Durch die Erfindung ist es also möglich, einen Naturstoff zu schonen, der überwiegend in Handarbeit abgebaut wird, weil ein erfindungsgemäßes Polymerblend sich als Flächenisolationswerkstoff und als fester Isolationswerkstoff eignet und für Motoren der oben genannten Wärmeklassen bis 250°C eine hohe Beständigkeit gegenüber Teilentladungen nachgewiesen wurde.

Die Bewertung der Teilentladungsresistenz erfolgt via Oberflächenprofilometer über die Ermittlung des spezifischen Erosionsvolumens nach der elektrischen Alterung. Diese wird in Anlehnung an die IEC 60343 durchgeführt. Der Versuchsaufbau sowie Testbedingungen können in der Veröffentlichung: n. Müller; S.Lang; R.Moos: "Influence of ambient conditions on electrical partial discharge resistance of epoxy anhydride based polymers using IEC 60343 method". Transactionson Dielectrics and Elektrical Insulation 2019, nachgelesen werden.

Nach einer vorteilhaften Ausführungsform ist das Copolymer auf Grundlage von Polyetherimid und Siloxan ein Block-Copolymer.

Insbesondere hat sich als vorteilhaft erwiesen, wenn der Anteil an Siloxan im Copolymer im Bereich von 0,1Gew% bis 90Gew% liegt, insbesondere bei 10Gew% bis 60Gew% und insbesondere bei 20Gew% bis 40Gew%, bezogen auf das Gesamtgewicht des Copolymers.

Nach einer vorteilhaften Ausführungsform liegt der atomare Anteil an Silizium-Atomen im Copolymer bei 0% bis 30% Atomprozent, insbesondere von 0 % bis 25 %, insbesondere bei 0% bis 15 %.

Nach einer vorteilhaften Ausführungsform der Erfindung ist das Polyetherimid-Siloxan-Copolymer ein Block-Copolymer der allgemeinen Formel (I) 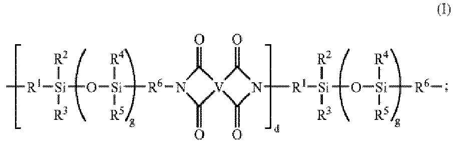 wobei
- **R**¹⁻⁶ gleich oder ungleich sind und ausgewählt aus der Gruppe der
   o substituierten oder unsubstituierten, gesättigten, ungesättigten oder aromatischen Monocyclen mit 5 bis 30 Kohlenstoffatomen,
   o substituierten oder unsubstituierten, gesättigten, ungesättigten oder aromatischen Polycyclen mit 5 bis 30 Kohlenstoffatomen,
   o substituierten oder unsubstituierten, gesättigten Kohlenwasserstoffen mit 1 bis 30 Kohlenstoffatomen,
   o substituierten oder unsubstituierten, ungesättigten Kohlenwasserstoffen mit 2 bis 30 Kohlenstoffatomen;
- **V** steht für eine 4-Valenzen habende Linkergruppe, ausgewählt aus der Gruppe der
   o substituierten oder unsubstituierten, gesättigten, ungesättigten oder aromatischen Monocyclen und Polycyclen mit 5 bis 50 Kohlenstoffatomen,
   o substituierten oder unsubstituierten, gesättigten Kohlenwasserstoffen mit 1 bis 30 Kohlenstoffatomen,
   o substituierten oder unsubstituierten, ungesättigten Kohlenwasserstoffen mit 2 bis 30 Kohlenstoffatomen,
   o sowie beliebig kombinierten Linkergruppen, die zumindest eine der vorgenannten Gruppen umfassen;
- **g** beträgt 1 bis 30 und
- **d** beträgt 2 bis 20.

Nach einer weiteren vorteilhaften Ausführungsform der Erfindung können in dem Copolymer ein oder mehrere Additive enthalten sein. Beispielsweise können ein oder mehrere Metalloxid(e), wie z.B. TiO₂ und/oder solche mit einer der folgenden Summenformeln Na₈Al₆Si₆O₂₄S₄ und/oder Na₆Al₆Si₆O₂₄S₂. Weitere Additive können Fe₂O₃ und/oder MnFe₂O₄ und/oder elektrisch nichtleitfähige Kohlenstoff basierte Füllstoffe, wie z.B. Industrieruß geeignete Additive sein. Bei Bedarf können die Additiv-Partikel teilweise oder ganz, vollflächig oder teilflächig, mit einer SiO₂-Beschichtung ausgestattet im Flächenisolationsstoff, also der dem Glimmerband der bisher üblichen Isolationssysteme vergleichbaren Teil des Isolationssystems, vorliegen.

Diese Additive sind insbesondere auch oxidationshemmend, so dass die Wärmeklasse und/oder der Temperatur-Index eines damit hergestellten Flächenisolationswerkstoffes weiter erhöht werden kann.

Additive werden bei der Herstellung des Blends beispielsweise zugemischt.

Weitere Additive, Verlaufshilfsmittel, Farbpigmente, Quarzpartikel und weiteres können dem Blend und/oder dem Imprägniermittel zur Herstellung des Isolationssystems zugemischt werden.

Als "Siloxan" wird vorliegend grundsätzlich eine Verbindung mit zumindest einer -Si-O-Si-Einheit verstanden, insbesondere solche, die im Polymer ein Si-O-Si-Rückgrat wie es in Siliconen üblich ist, bilden. Beispielsweise sind ein Polydialkylsiloxan, wie das Polydimethylsiloxan, oder Polydiarylsiloxan, wie das Polydiphenylsiloxan einfache Formen eines Siloxans. Natürlich gibt es auch gemischte Formen von Siloxanen wie beispielsweise ein Polyarylalkylsiloxan.

Als Polyetherimid oder "PEI" wird der bekannte Thermoplast bezeichnet, der vielfältig einsetzbar ist, weil er hochtemperaturbeständig ist und als flammwidrig eingestuft wird. Dies insbesondere deshalb, weil er geringe Rauchentwicklung zeigt, wenn er dennoch mal brennt. PEI hat hohe Festigkeit, auch hohe elektrisch Durchschlagsfestigkeit, geringes Gewicht und ist gegen UV-Licht und Gammastrahlen beständig. Insbesondere ist PEI als "ULTEM^{®}" handelsüblich.

Das Polyetherimid wird gemäß einer vorteilhaften Ausführungsform der Erfindung einmal zur Bildung des Copolymers mit Siloxan eingesetzt, also die Monomere des Polyetherimids und die Monomere des Siloxans werden gemeinsam zu einem Polymer gehärtet.

Zum zweiten wird PEI zu Herstellung des Polymerblends, unabhängig vom eingesetzten Copolymer, bei der Abmischung des Copolymers zur Bildung des Polymerblends nach einer vorteilhaften Ausführungsform der Erfindung eingesetzt.

Polyetheretherketon PEEK ist ein hochtemperaturbeständiger thermoplastischer Kunststoff und gehört zur Stoffgruppe der Polyaryletherketone. PEEK liegt bei Raumtemperatur fest vor mit einer Schmelztemperatur von 335°C. PEEK liegt teilkristallin vor und ist gegenüber fast allen organischen und anorganischen Chemikalien beständig. Außerdem ist es schwer entflammbar und zeigt hohe Teilentladungsresistenz. PEEK wird beispielsweise in röntgenopaker Form von Evonic^{®} vertrieben.

Die Bildung des Polymerblends erfolgt durch einfaches Mischen der zumindest drei Komponenten Copolymer, mit zwei Thermoplasten, z.B. PEI und PEEK. Die Eigenschaften des Polymerblends, insbesondere hinsichtlich Temperaturbeständigkeit entsprechen weder denen des Copolymers noch denen der Thermoplasten alleine. Ein Polymerblend in diesem Sinn ist eine rein physikalische Mischung, es entstehen keine neuen chemischen Bindungen zwischen den Makromolekülen.

Als Imprägnierharz zur Bildung des Kunstharzes einer Wickelbandisolation und/oder eines Nutkastens aus dem flächigen Folienmaterial durch beispielsweise VPI-Prozess der gewickelten Isolation, also zur Imprägnierung der Wickelbandisolierung wird vorzugsweise ein Duromer eingesetzt. Dabei kann beispielsweise Polyester, Formaldehyd, Epoxid, Novolak, Silikon, Polyesterimid, Polyurethan sowie beliebige Mischungen, Blends und Copolymere der vorgenannten Verbindungen eingesetzt werden. Imprägnierharze für Nutauskleidungen und/oder Wickelbandisolationen sind allgemein, unter anderem aus den oben genannten Patentschriften, bekannt. Die festen Isolationsstoffe werden mit diesen Imprägnierharzen imprägniert und das Harz dann ausgehärtet damit das Isolationssystem fertiggestellt ist.

Zur Herstellung eines Nutkastens wird beispielsweise eine Folie aus dem Polymerblend nach einem Ausführungsbeispiel der Erfindung, indem die Folie entweder allein oder als Laminat zwischen zwei mAramid = Meta-Aramid-Papieren eingebettet, eingesetzt wird.

mAramid und verwandte Aramidpolymere sind mit Nylon verwandt, haben jedoch aromatische Rückgrate (backbones) und sind daher steifer und haltbarer. mAramid ist ein Beispiel für eine Meta-Variante der Aramide, beispielsweise Kevlar^{®} ist ein Para-Aramid. mAramide haben eine ausgezeichnete thermische, chemische und Strahlungsbeständigkeit für ein Polymermaterial. mAramid hält Temperaturen von bis zu 370°C stand.

Im Folgenden wird die Erfindung noch anhand von Figuren, die Messungen an beispielhaften Ausführungsformen der Erfindung zeigen, näher erläutert:

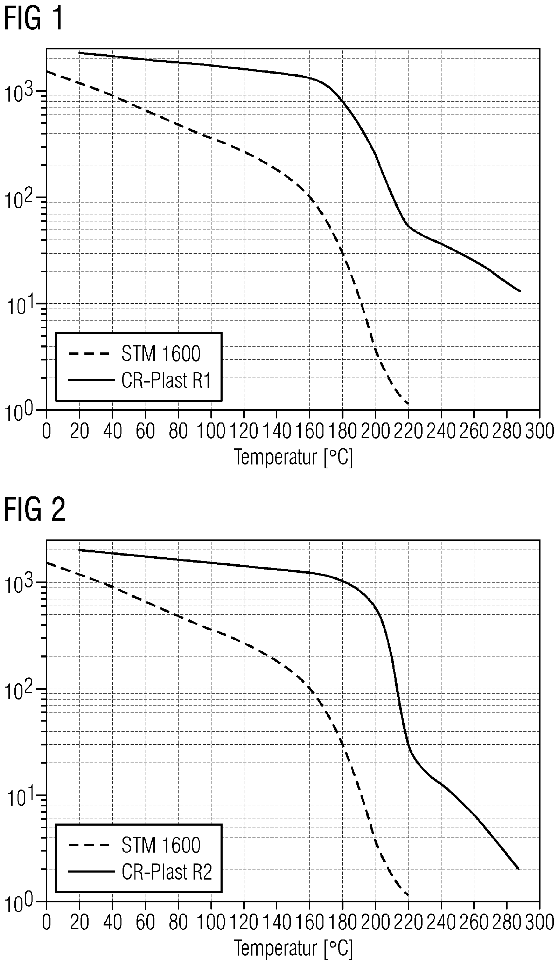

Die Figuren 1 und 2 zeigen Diagramme von Dynamisch-mechanischen Thermo-Analysen DMA, die anerkanntermaßen die empfindlichste Methode zur Messung der Glasübergangstemperatur Tg ist.

Gemessen wurde mit dem Dynamisch-mechanischen Analysator Discovery DMA850 von TA Instruments.

Gemessen wird der Speichermodul, was in etwa dem Elastizitäts-Modul entspricht, aufgetragen über die Temperatur.

Den beiden Diagrammen ist gemeinsam, dass ab einer gewissen Temperatur ein rapider Abfall stattfindet, das heißt, der Tg fällt rapide ab oder der Polymerblend verliert seine Festigkeit, wobei - bei den dargestellten Beispielen zwar ein gummiartiger Zustand erkannt werden konnte, aber kein Zerfließen des Polymerblends.

Figur 1 zeigt gestrichelt als
- Referenzprobe eine Aufnahme des nicht geblendeten BlockCopolymers - hier eine Probe des Siltem^{®} STM1600 - Materials der Firma Sabic und
- als durchgehende Linie ein Ausführungsbeispiel gemäß der vorliegenden Erfindung STM1600^{®}+ PPS+PEEK+PEI.

Zu erkennen ist klar, dass das Polymerblend gemäß einem Ausführungsbeispiel der vorliegenden Erfindung aus dem Copolymer + PPS + PEEK + PEI wesentlich länger seine Steifigkeit und seine Festigkeit als die Referenzprobe erhält und selbst bei 240°C immer noch ein E-Modul oder Storage Modulus von über 50 MPa zeigt. Das reine Copolymer hingegen zeigt einen wesentlich niedrigeren Tg und hat schon bei 180°C diesen Wert von 50 MPa.

Figur 2 zeigt auch den Speichermodul über die Temperatur aufgetragen, jedoch von einem zweiten Ausführungsbeispiel der Erfindung wieder gegen die Referenz des reinen Copolymers. Zu sehen ist wieder ein sehr hoher Tg von über 180°C. Dieses Ausführungsbeispiel zeigt das Polymerblend in anderer Mischung, diesmal mit PEI in einer Menge von 50 Gew%. Das Copolymer, PEEK und die schwefelhaltige Polymerkomponente ergeben zusammen auch 50 Gew%, wobei PPS darin mit nur 5Gew% vorliegt.

Zu erkennen ist ein etwas steilerer Abfall des Elastizitätsmoduls, beim Vergleich wieder von der gestrichelt eingezeichneten Referenzprobe Siltem^{®}1600 und dem in durchgezogener Linie dargestellten Ausführungsbeispiel eines Polymerblends aus Copolymer Siltem^{®}1600, PPS, PEEK und PEI, in dem 50Gew% PEI vorliegt.

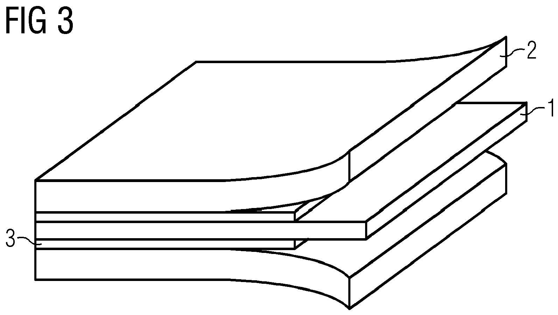

Figur 3 zeigt einen beispielhaften Aufbau eines Flächenisolationswerkstoffes nach einer Ausführungsform der Erfindung.

In Figur 3 ist mittig eine Lage aus einem Polymerblend 1 gemäß einem Ausführungsbeispiel der vorliegenden Erfindung zu erkennen. Diese Lage ist beidseitig von einer Abdecklage 2, beispielsweise einem Aramidpapier, umgeben. Die drei Lagen sind über Laminierkleber 3 verbunden.

Das Polymerblend gemäß der Erfindung zeigt viele Vorteile, unter anderem auch die für synthetische Materialien typische Reproduzierbarkeit, die ein Vorteil gegenüber dem Naturmaterial Glimmer darstellt.

Des Weiteren können alle relevanten Glimmerkomponenten in den jeweiligen Isolationssystemen mit dem vorgeschlagenen Blend ersetzt werden. Die Herstellung von Folien aus dem Material ist durch den Prozess der Extrusion sehr kostengünstig und einfach. Die eventuell notwendige Weiterverarbeitung der Folien zu Laminaten (wie im Stand der Technik die Weiterverarbeitung der Glimmerpapiere zu Laminaten) ist sehr einfach möglich. Auch die Weiterverarbeitung zu schmalen Rollen als Glimmerbandersatz ist möglich. Durch Drahtextrusion können die Drahtisolationen hergestellt werden. Grundsätzlich können die Biegeradien der genannten thermoplastischen Isolation enger als die einer glimmerhaltigen Isolation gewählt werden, da die Materialdehnungen deutlich höher sind. Daraus können konstruktive Vorteile entstehen. Zusätzlich ist aber auch durch das Spritzgießen nun auch eine zusätzliche Verarbeitungsmethode entstanden, die sehr einfach die Hauptisolation ersetzen kann. Vorher wurde diese durch Glimmerbandbewicklung der Spule und anschließendem Tränkprozess und wiederum anschließenden Aushärteprozess aufwändig = teuer hergestellt.

Wird das Polymerblend als dicke Folie extrudiert, so kann auch ein sogenannter Nuteinleger und/oder eine Nutauskleidung einfach hergestellt werden, in dem die Folie allein, oder auch als Laminat, eingebettet zwischen zwei mAramid-Papiere, vorliegt.

Ein Polymerblend gemäß der vorliegenden Erfindung zeigt gute Teilentladungsbeständigkeit und auch hohe Glasübergangstemperaturen, Tgs, wie durch Diagramme, wie in den Figuren gezeigt, nachweisbar ist. So hat sich überraschend herausgestellt, dass mit einem Polymerblend, wie vorliegend beschrieben aus zumindest einem Copolymer auf Grundlage von Polyetherimid und Siloxan und zwei Hochtemperaturthermoplasten, in denen Sphärolithe nachweisbar sind, die Verwendung von Glimmer und/oder Glimmerpapieren in elektrischen Isolationen ersetzt oder zumindest stark reduziert werden können.

## Patentansprüche

1. Isolationssystem, ein Polymerblend in Form eines
- festen Flächenisolationswerkstoffes, eines
- Materials für die Drahtisolierung mittels Extrusion und/oder eines
- spritzgegossenen und/oder formgepressten Formteils umfassend,
**dadurch gekennzeichnet, dass**
das Polymerblend teilentladungsresistent ist, den Glimmeranteil im Isolationssystem zumindest teilweise ersetzt und ein Polymerblend zumindest dreier Blendpartner ist, in dem zumindest ein Copolymer auf Grundlage von Polyetherimid und Siloxan mit zumindest zwei Hochtemperaturthermoplasten geblendet vorliegt, wobei mindestens einer der HochtemperaturThermoplasten teilkristallin vorliegt, so dass im Polymerblend Sphärolithe nachweisbar sind.

2. Isolationssystem nach Anspruch 1, wobei im Polymerblend jeder der Blendpartner in einem Anteil von 1 bis 70 Gew% vorliegt.

3. Isolationssystem nach Anspruch 1 oder 2, wobei im Polymerblend Polyetherimid PEI als Hochtemperaturplast-Blendpartner vorliegt.

4. Isolationssystem nach einem der vorstehenden Ansprüche, wobei im Polymerblend Polyetheretherketon als teilkristalliner Hochtemperaturplast-Blendpartner vorliegt.

5. Isolationssystem nach einem der vorstehenden Ansprüche, wobei das Polymerblend als Folie und/oder Laminat vorliegt.

6. Isolationssystem nach einem der vorstehenden Ansprüche, wobei im Polymerblend eine schwefelhaltige Polymerkomponente vorliegt.

7. Isolationssystem nach einem der vorstehenden Ansprüche, wobei die schwefelhaltige Polymerkomponente im Polymerblend in einer Menge von bis zu 25 Gew% vorliegt.

8. Isolationssystem nach einem der vorstehenden Ansprüche, bei dem die Blendpartner alle in ungefähr gleichen Masseanteilen vorliegen.

9. Isolationssystem nach einem der vorstehenden Ansprüche 1 bis 7, wobei die Copolymer-Polymerblendkomponente auf Grundlage von Polyetherimid und Siloxan die meisten Masseanteile im Polymerblend hat.

10. Isolationssystem nach einem der vorstehenden Ansprüche 1 bis 7, wobei ein PEK die meisten Masseanteile im Polymerblend hat.

11. Isolationssystem nach einem der vorstehenden Ansprüche 1 bis 7, wobei PEI die meisten Masseanteile im Polymerblend hat.

12. Isolationssystem nach einem der vorstehenden Ansprüche 1 bis 7, wobei die schwefelhaltige Polymerkomponente die meisten Masseanteile im Polymerblend hat.

13. Isolationssystem nach einem der vorstehenden Ansprüche, wobei in dem Copolymer auf Grundlage von Polyetherimid und Siloxan ein Anteil an Silizium-Atomen im Bereich von 1% bis 25 %, bezogen auf alle Atome in dem Copolymer, vorliegt.

14. Isolationssystem nach einem der vorstehenden Ansprüche, wobei im Polymerblend ein oder mehrere oxidationshemmende Additiv(e) vorgesehen sind.

15. Verwendung eines Polymerblends nach einem der Ansprüche 1 bis 14 in einer Drahtextrusion als Teilleiterisolation respektive Windungsisolation und/oder als Hauptisolation bei Hairpin-Spulen mit nachfolgender Fixierung durch Verguss, Imprägnierung, Träufelung, Tauchen und/oder Spritzguss.

16. Verwendung eines Polymerblends nach einem der Ansprüche 1 bis 14 in einem Spritzguss Verfahren zur Herstellung einer elektrischen Hauptisolation oder Teile einer elektrischen Hauptisolation eines Stators eines elektrischen Motors oder Generators.

17. Verwendung eines Polymerblends nach einem der Ansprüche 1 bis 14 in einem Formpress Verfahren zur Herstellung einer elektrischen Isolation und/oder von Teilen einer elektrischen Isolation eines Stators eines elektrischen Motors oder Generators.

18. Verwendung eines Polymerblends nach einem der Ansprüche 1 bis 14 als Laminat oder Folie zur Herstellung zumindest eines Teils eines Isolationssystems mit Imprägnierung mittels Vakuum-Druck-Imprägnierung.

19. Verwendung eines Polymerblends nach einem der Ansprüche 1 bis 14 als Nutauskleidung für eine Isolation eines Stators eines elektrischen Motors oder Generators.

20. Elektrische Maschine mit einem Stator, der ein elektrische Isolationssystem aufweist, in der ein Polymerblend nach einem der Ansprüche 1 bis 14 nachweisbar ist.
